# EUROPÄISCHE PATENTSCHRIFT

(11) **EP 0 502 311 B1**
(45) Veröffentlichungstag und Bekanntmachung des Hinweises auf die Patenterteilung: **18.09.1996**
(21) Anmeldenummer: 92101446.0
(22) Anmeldetag: 29.01.1992
(51) Int. Cl.: B60G 11/34, B60G 9/00

(54) **Luftgefederte, lenkbare Räder tragende Achse eines Kraftfahrzeuges**
Axle with steered wheels and pneumatic suspension for a motor vehicle
Essieu à roues directrices et à suspension pneumatique pour véhicule à moteur

(30) Priorität: 07.03.1991 DE 4107306
(43) Veröffentlichungstag der Anmeldung: 09.09.1992
(73) Patentinhaber: MAN Nutzfahrzeuge Aktiengesellschaft, 80976 München (DE)
(72) Erfinder: Fuchs, Dietrich, Dr.-Ing., W-8047 Karlsfeld (DE)

(56) Entgegenhaltungen:
- EP-A- 0 318 683
- EP-A- 0 352 541
- DE-A- 2 924 738
- DE-A- 3 813 391
- DE-C- 1 108 089

## Beschreibung

Die Erfindung betrifft eine luftgefederte, lenkbare Räder tragende Achse eines Kraftfahrzeuges, insbesondere Omnibus oder Lastkraftwagen.

In Verbindung mit luftgefederten Starrachsen von Lastkraftwagen und Omnibussen sind die verschiedensten Achsaufhängungen bekannt. Auf eine davon, nämlich jene aus der EP 0 352 541 A1 bekannte und dem Oberbegriff des Anspruchs 1 entsprechende, ist nachfolgend näher eingegangen.

Diese bekannte Achsführung umfaßt
a) je Achsseite ein am Achskörper befestigtes, diesen vorn und hinten überragendes Längsfederblatt zur Seiten- und Längsführung,
b) eine vordere rahmenfeste Anlenkung je Längsfederblatt,
c) eine hintere rahmenfeste, aber längsweiche Anlenkung für das Längsfederblatt zur Vertikalkraftaufnahme aus der Momentenabstützung,
d) direkt oberhalb und in Kontakt gehalten mit jedem Längsfederblatt einen weiteren Längslenker, wobei dieser Längslenker
   d1) als Parabelfeder ausgebildet ist,
   d2) vorn am selben Lager wie das Längsfederblatt angelenkt ist,
   d3) den Achskörper hinten überragt und
   d4) endseitig mit einer Luftfeder verbunden ist,
e) einen bügelförmigen Stabilisator, der
   e1) einenendes am Achskörper angelenkt ist,
   e2) andernendes über Schwingen am Rahmen angelenkt ist.

Desweiteren ist es bei Omnibussen oder Lastkraftwagen bekannt, eine gekröpfte Starrachse als Vorderachse zu verwenden, die von zwei längsstabilisierend wirkenden Hoch-Längsfederblattlenkern und einem querstabilisierenden Panhardstab geführt wird. Gerade aber der querführende Panhardstab stellt, weil unter dem Antriebsaggregat verlaufend, ein besonderes Hindernis dar.

Es ist daher Aufgabe der Erfindung, eine luftgefederte Achse mit lenkbaren Rädern zu schaffen, deren Achsführung ohne Panhardstab auskommt, wenig Bauraum beansprucht und im Ergebnis das Führungsverhalten gegenüber bekannten Lösungen verbessert.

Diese Aufgabe ist erfindungsgemäß durch eine Achse mit den im Anspruch 1 angegebenen Kombinationsmerkmalen gelöst.

Vorteilhafte Ausgestaltungen dieser Lösung sind in den Unteransprüchen angegeben.

Mit der erfindungsgemäßen Lösung ergeben sich verschiedene, nachstehend kurz skizzierte Vorteile:
- kein querführender Panhardstab mehr notwendig, dadurch Gewinn an Bauraum und größere Einbauflexibilität für das Antriebsaggregat und die zugehörigen Nebenaggregate des Fahrzeugs,
- verzwängungsfreie Achsführung,
- keine Zwangstorsion des Achskörpers,
- besonders geeignet für angetriebene Vorderachsen,
- keine zusätzliche Einfederung durch ein Bremsmoment,
- keine Nachlaufveränderung bei Parallel-Einfederung,
- keine kurvenäußere Nachlaufveränderung bei einseitiger Einfederung.

Nachstehend ist die erfindungsgemäße Achse anhand eines in der Zeichnungdargestellten Ausführungsbeispieles noch näher erläutert.

In der Zeichnung zeigen:

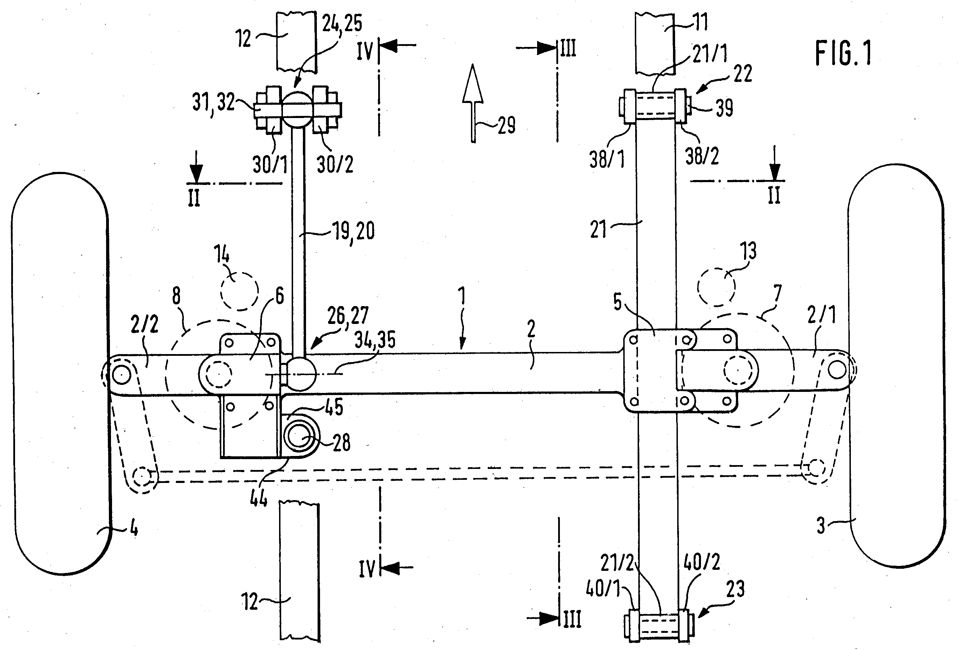

- Fig.1: eine Draufsicht auf die schematisiert dargestellte Achse,

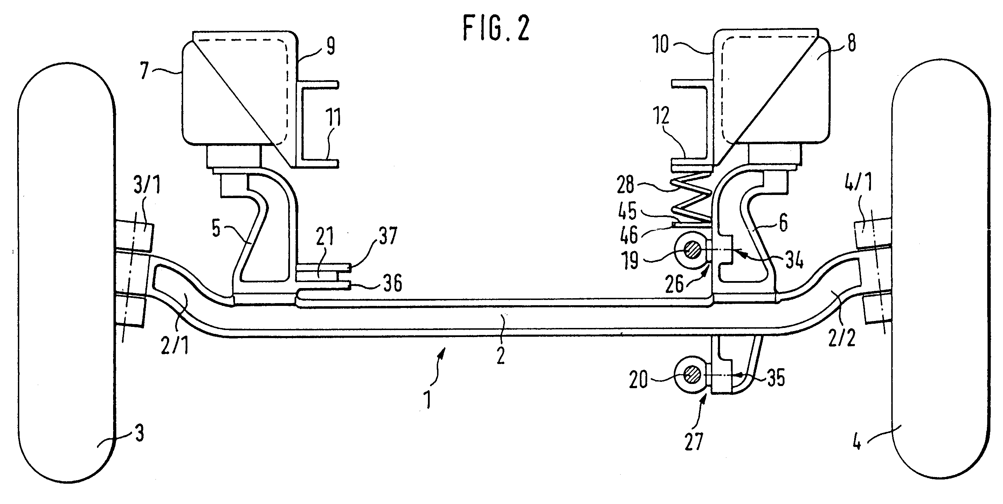

- Fig.2: eine Vorderansicht der Achse in Verbindung mit einem Querschnitt durch die Achsführung gemäß Fig. 1 entlang der Linie II-II, und

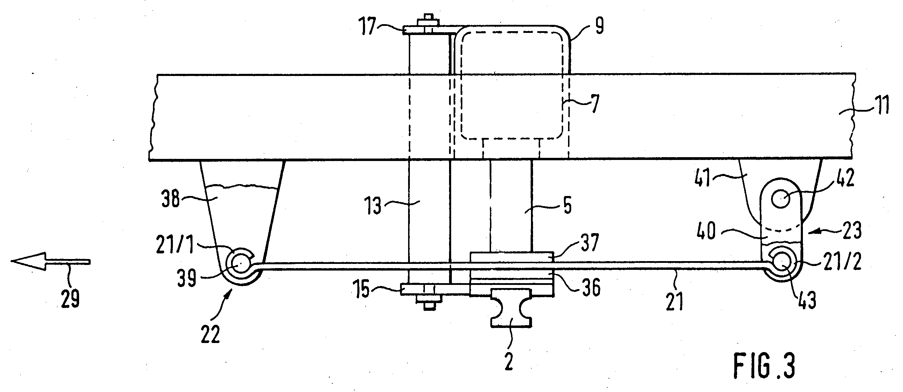

- Fig.3: einen Längsschnitt durch die Achse gemäß Fig. 1 entlang der Linie III-III,

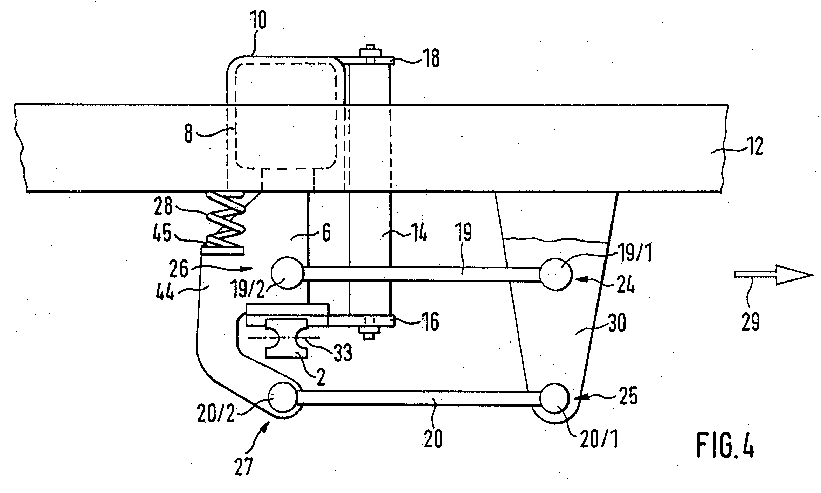

- Fig.4: einen Längsschnitt durch die Achse gemäß Fig. 1 entlang der Linie IV-IV.

Die insgesamt mit 1 bezeichnete Achse besteht aus einem weitgehend biege-und torsionssteif ausgelegten Achskörper 2, an dessen hochgekröpften, faustartigen Enden 2/1, 2/2 lenkbare Räder 3,4 mit ihren Radträgern 3/1, 4/1 angelenkt sind. Der Achskörper 2 weist oben zwei Lagerböcke 5, 6 auf, an deren oberem Plateau je eine Luftfeder 7, 8 befestigt ist. Jede der Luftfedern 7, 8 ist oben an einem Halter 9, 10 abgestützt, der außen an einem der beiden Rahmenlängsträger 11, 12 des Kraftfahrzeugs befestigt ist. In ähnlicher Weise wie die beiden Luftfedern 7, 8 sind jeweils benachbart zu diesen Stoßdämpfer 13, 14 zwischen Achskörper 2 und Rahmenlängsträger 11 bzw. 12 angeordnet, wobei zur Befestigung und Abstützung der Stoßdämpfer 13, 14 unten jeweils seitlich nach vorn am zugehörigen Lagerbock 5, 6 abragende Stützarme 15, 16 und oben jeweils am Halter 9, 10 nach vorn auskragende Stützarme 17, 18 vorgesehen sind.

Zur Führung dieser Achse 1 sind in Kombination mit besagtem Achskörper 2 folgende Bauteile vorgesehen, nämlich
a) ein am Achskörper 2 befestigtes, diesen vorn überragendes Längslenker-Paar 19, 20 zur Momentenabstützung und Längsführung auf einer Seite der Achse 1, und
b) ein am Achskörper 2 -diesen vorn und hinten überragend - befestigtes Längsfederblatt 21 auf der anderen Seite der Achse 1 zu deren diesseitiger Seiten-und Längsführung, und
c) eine vordere rahmenfeste Anlenkung 22 für das Längsfederblatt 21, und
d) eine hintere rahmenfeste, aber längsweiche Anlenkung 23 zur Seitenführung und Vertikalkraftaufnahme aus der Momentenabstützung für das Längsfederblatt 21, und
e) eine vordere rahmenfeste Anlenkung 24, 25 für das Längslenker-Paar 19, 20, und
f) eine hintere achskörperseitig feste Anlenkung 26, 27 für das Längslenker-Paar 19, 20, und
g) eine Zusatzfeder 28 auf der Seite des Längslenker-Paares 19, 20 zum Ausgleich der Vertikalfederkonstante des andernseitigen Längsfederblattes 21 mit beiderseits (bezogen auf den Achskörper 2) gleicher Nullage.

Die beiden Lenker 19, 20 des Längslenker-Paares verlaufen vorzugsweise parallel horizontal zu einander und, sind vorzugsweise in einer Fahrzeuglängsvertikalebene übereinander so angeordnet, daß der eine Lenker 19 oberhalb des Achskörpers 2 und der andere Lenker 20 unterhalb des letzteren verlaufend gegeben ist. Dieser Fall ist in der Zeichnung dargestellt. Die beiden Lenker 19, 20 können aber auch in verschiedenen Fahrzeug-Längsvertikalebenen übereinander angeordnet sein. Außerdem können die beiden Lenker 19, 20 entweder gleich lang - wie in der Zeichnung dargestellt-oder unterschiedlich lang sein. Die hinteren achskörperseitigen Anlenkstellen 26, 27 und die vorderen rahmenseitigen Anlenkstellen 24, 25 der beiden Lenker 19, 20 liegen vorzugsweise - wie in der Zeichnung dargestellt-jeweils in einer Vertikalquerebene des Fahrzeugs. Die vorderen rahmenseitigen Anlenkstellen 24, 25 können aber ebenso wie die hinteren achskörperseitigen Anlenkstellen 26, 27 jeweils in mehr als zwei, also maximal vier verschiedenen Vertikalquerebenen des Fahrzeugs liegen. Außerdem sind die vorderen Anlenkstellen 26, 27 der beiden Lenker 19, 20 vorzugsweise gleich weit nach oben bzw. unten von der Längsmittelebene 33 des Achskörpers 2 beabstandet. Für die (in Fahrtrichtung vorwärts gemäß Pfeil 29 gesehen) vordere Anlenkung 24, 25 der beiden Lenker 19, 20 ist vorzugsweise ein gemeinsamer, am Rahmenlängsträger 12 des Fahrzeugs befestigter (angeschweißter oder angeschraubter), nach unten abragender stabiler Lagerbock 30 vorgesehen. Dabei ist jeder der beiden Lenker 19, 20 mit seinem vorderen Endkopf 19/1, 20/1 praktisch ohne Seitenspiel entweder zwischen Seitenwangen 30/1, 30/2 des Lagerbockes 30 eingepaßt oder - falls letzterer einwangig ausgebildet ist-seitlich an diesem angesetzt und über eine Querachsverbindung 31, 32 angelenkt. Die (in Fahrtrichtung vorwärts) gemäß Pfeil 29 gesehen) hintere Anlenkung 26,27 jedes der beiden Lenker 19, 20 erfolgt vorzugsweise am achskörperseitigen Lagerbock 6. Hierzu weist jeder der beiden Lenker 19, 20 einen hinteren Endkopf 19/2, 20/2 auf, mit dem er seitenfest über eine Querachsverbindung 34, 35 an der Innenseite des Lagerbockes 6 angelenktist.

Jeder der beiden Lenker 19, 20 besteht vorzugsweise aus einer stabilen Rund-Stahlstange, an der die Endköpfe 19/1, 19/2 bzw.20/1, 20,2 vorzugsweise angeschmiedetsind.

Das auf der gegenüberliegenden Seite der Achse 1 gegebene Längsfederblatt 21 besteht aus wenigstens einem Stahlfederblatt oder faserverstärktem Kunststofflaminat und ist parallel zur Fahrzeug-Längsachse verlaufend mit dem Achskörper 2, diesen vorzugsweise zu gleichen Teilen vorn und hinten überragend, verbunden. Im dargestellten Beispiel ist ein innenseitig am achskörperseitigen Lagerbock 5 auskragendes Stützplateau 36 vorgesehen, auf dem das Längsfederblatt 21 unter Zuhilfenahme einer aufgelegten Spannplatte 37 festgespannt ist. Für die vordere Anlenkung 22 des Längsfederblattes 21 ist ein stabiler, am Rahmenlängsträger 11 des Fahrzeugs befestigter (angeschraubter oder angeschweißter), nach unten abragender Lagerbock 38 vorgesehen, an dem das Längsfederblatt 21 mit seinem durch Rollen oder Biegen erzeugten vorderen Lagerauge 21/1 entweder zwischen Seitenwangen 38/1, 28,2 eingepaßt oder-falls dieser einwangig ausgebildet ist-seitlich an diesem über eine quer durchgehende Verschraubung 39 festgelegt ist. Die hintere, seitenführende, vertikalkraftaufnehmende und längsweiche Anlenkung 23 des Längsfederblattes 21 ist durch eine am Rahmenlängsträger 11 des Fahrzeugs hängend angelenkte Schwinge 40 gebildet. Dabei ist die Schwinge 40 seitenstabil an einem Lagerbock 41 über eine querdurchgehende Lagerachsverschraubung 42 - um diese verschwenkbar-hängend angelenkt. Der besagte Lagerbock 41 ist dabei nach unten abragend fest (angeschraubt oder angeschweißt) am Rahmenlängsträger 11 angeordnet. Die Schwinge 40 besteht aus wenigstens einer Wange, vorzugsweise jedoch zwei gegebenenfalls durch einen Quersteg miteinander verbundenen Wangen 40/1, 40/2, an der seitlich angesetzt bzw. zwischen deren unteren Enden eingepaßt und mittels einer weiteren quer durchgehenden Lagerachsverschraubung 43 das zu einem Lagerauge 21/2 ausgebildete (gerollte oder gebogene) hintere Ende des Längsfederblattes 21 praktisch seitenspielfrei befestigt ist.

Die Zusatzfeder 28 ist zwischen einem an einem innenseitig an dem das Längslenker-Paar 19,20 anlenkenden achskörperseitigen Lagerbock 6 auskragenden Tragarm 44 oben gegebenen Plateau 45 und der Unterseite des Rahmenlängsträgers 12 eingespannt. Die Zusatzfeder 28 kann durch eine Spiralfeder oder durch eine aus mehreren einander übergreifenden Spiralfedern zusammengesetzte Druckfederanordnung gebildet sein, deren Federeigenschaften dem weiter vorn bereits erwähnten Zweck entsprechend auf jene des Längsfederblattes 21 abgestimmt ist.

## Patentansprüche

1. Luftgefederte, lenkbare Räder (3, 4) tragende Achse (1) eines Kraftfahrzeuges, insbesondere Omnibus oder Lastkraftwagen, gekennzeichnet durch die Kombination eines weitgehend biege- und torsionssteifen Achskörpers (2) mit einer Achsführung, die
a) ein am Achskörper (2) befestigtes, diesen vorn überragendes Paar von übereinander angeordneten Längslenkern (19, 20) zur Momentenabstützung und Längsführung auf einer Seite der Achse (1), und
b) ein am Achskörper (2) - diesen vorn und hinten überragend - befestigtes Längsfederblatt (21) auf der anderen Seite der Achse (1) zu deren diesseitiger Seiten- und Längsführung, und
c) eine vordere rahmenfeste Anlenkung (22) für das Längsfederblatt (21), und
d) eine hintere rahmenfeste, aber längsweiche Anlenkung (23) für das Längsfederblatt (21) zur Vertikalkraftaufnahme aus der Momentenabstützung, und
e) eine vordere rahmenfeste Anlenkung (24, 25) für jeden der beiden Längslenker (19, 20), und
f) eine hintere achskörperseitig feste Anlenkung (26, 27) für jeden der beiden Längslenker (19, 20), und
g) eine Zusatzfeder (28) auf der Seite des Längslenker-Paares (19, 20) zum Ausgleich der Vertikalfederkonstante des andernseitigen Längsfederblattes (21) mit beiderseits, bezogen auf den Achskörper 2, gleicher Nullage,
aufweist.

2. Achse nach Anspruch 1, dadurch gekennzeichnet, daß deren Achskörper (2) im Sinne einer gekröpften Faustachse ausgebildet ist.

3. Achse nach Anspruch 1, dadurch gekennzeichnet, daß die beiden Lenker (19, 20) des Längslenker-Paares parallel zueinander horizontal in einer Fahrzeuglängsvertikalebene übereinander angeordnet sind.

4. Achse nach Anspruch 1, dadurch gekennzeichnet, daß die beiden Lenker (19, 20) des Längslenker-Paares parallel zueinander horizontal, aber in verschiedenen Fahrzeuglängsvertikalebenen übereinander angeordnet sind.

5. Achse nach einem der Ansprüche 3 und 4, dadurch gekennzeichnet, daß der eine Lenker (19) des Längslenker-Paares (19, 20) oberhalb des Achskörpers (2) und der andere Lenker (20) unterhalb des letzteren verlaufend angeordnet ist.

6. Achse nach einem der Ansprüche 3 bis 5, dadurch gekennzeichnet, daß die beiden Lenker (19, 20) des Längslenker-Paares gleich lang sind.

7. Achse nach einem der Ansprüche 3 bis 5, dadurch gekennzeichnet, daß die beiden Lenker (19, 20) des Längslenker-Paares unterschiedlich lang sind.

8. Achse nach einem der Ansprüche 6 und 7, dadurch gekennzeichnet, daß die hinteren achskörperseitigen Anlenkstellen (26, 27) der beiden Lenker (19, 20) des Längslenker-Paares in einer Vertikalquerebene des Fahrzeugs liegen.

9. Achse nach einem der Ansrüche 6 und 7, dadurch gekennzeichnet, daß die vorderen rahmenseitigen Anlenkstellen (24, 25) und die hinteren achskörperseitigen Anlenkstellen (26, 27) der beiden Lenker (19, 20) des Längslenker-Paares jeweils in verschiedenen Vertikalquerebenen des Fahrzeugs liegen.

10. Achse nach einem der Ansprüche 3 bis 9, dadurch gekennzeichnet, daß als vordere Anlenkungen (24, 25) für die beiden Lenker (19, 20) des Längslenker-Paares vorzugsweise ein gemeinsamer, an einem Rahmenlängsträger (12) des Fahrzeugs befestigter - angeschweißter oder angeschraubter -, nach unten abragender stabiler Lagerbock (30) vorgesehen ist, und daß jeder der beiden Lenker (19, 20) mit einem vorderen Endkopf (19/1, 20/1) praktisch ohne Seitenspiel zwischen den beiden Seitenwangen (30/1, 30/2) des Lagerbockes (30) eingepaßt oder seitlich an diesem angesetzt und über eine Querachsverbindung (31, 32) angelenktist.

11. Achse nach einem der Ansprüche 3 bis 9, wobei der Achskörper (2) oben zwei -je Achsseite einen- Lagerböcke (5,6) aufweist, auf deren oberem Plateau je eine andernendes an einem Rahmenlängsträger (11, 12) des Fahrzeugs abgestützte Luftfeder (7, 8) befestigt ist, dadurch gekennzeichnet, daß jeder der beiden Lenker (19, 20) des Längslenker-Paares im Bereich seiner hinteren Anlenkung (26,27) einen Endkopf (19/2), 20/2) aufweist und seitenfest über eine Querachsverbindung (34, 35) am achskörperseitigen Lagerbock (6) angelenkt ist.

12. Achse nach einem der Ansprüche 3 bis 11, dadurch gekennzeichnet, daß beide Lenker (19, 20) des Längslenker-Paares aus stabilen Rund-Stahlstangen mit endseitigen, vorzugsweise angeschmiedeten Befestigungsköpfen bestehen.

13. Achse nach Anspruch 1, dadurch gekennzeichnet, daß das Längsfederblatt (21) mit dem Achskörper (2) diesen vorn und hinten vorzugsweise zu gleichen Teilen überragend verbunden ist.

14. Achse nach den Ansprüchen 11 und 13, dadurch gekennzeichnet, daß an jenem (5) der beiden achskörperseitigen Lagerböcke (5, 6), der dem als Anlenkung für die Lenker (19, 20) des Längslenker-Paares dienenden (6) gegenüberliegt, ein innenseitig auskragendes Stützplateau (36) gegeben ist, auf dem das Längsfederblatt (21) befestigt ist.

15. Achse nach einem der Ansprüche 1 und 14, dadurch gekennzeichnet, daß für die vordere Anlenkung (22) des Längsfederblattes (21) ein stabiler, an einem Rahmenlängsträger (11) des Fahrzeugs befestigter - angeschraubter oder angeschweißter-, nach unten abragender Lagerbock (38) vorgesehen ist, an dem das Längsfederblatt (21) mit seinem durch Rollen oder Biegen erzeugten vorderen Lagerauge (21/1) zwischen Seitenwangen (38/1, 38/2) eingepaßt oder seitlich an diesem angesetzt und mittels einer quer durchgehenden Verschraubung (39) festgelegt ist.

16. Achse nach einem der Ansprüche 1, 14 und 15, dadurch gekennzeichnet, daß die hintere, seitenführende, vertikalkraftaufnehmende und längsweiche Anlenkung (23) für das Längsfederblatt (21) durch eine am zugehörigen Rahmenlängsträger (11) des Fahrzeugs hängend angelenkte Schwinge (40) gebildet ist.

17. Achse nach Anspruch 16, dadurch gekennzeichnet, daß die Schwinge (40) an ihrem oberen Ende seitenstabil an einem Lagerbock (41) über eine quer durchgehende Lagerachsverschraubung (42) - um diese verschwenkbar - hängend angelenkt und besagter Lagerbock (41) nach unten abragend fest - angeschraubt oder angeschweißt - am Rahmenlängsträger (11) angeordnet ist, und daß die Schwinge (40) aus wenigstens einer, vorzugsweise zwei, gegebenenfalls durch einen Quersteg miteinander verbundenen Wangen (40/1, 40/2) besteht, an der seitlich angesetzt bzw. zwischen deren unteren Enden mittels einer weiteren quer durchgehenden Lagerachsverschraubung (43) das zu einem Lagerauge (21/2) ausgebildete-gerollte oder gebogene-hintere Ende des Längsfederblattes (21) praktisch seitenspielfrei aufgenommen und befestigt ist.

18. Achse nach den Ansprüchen 1 und 11, dadurch gekennzeichnet, daß die Zusatzfeder (28) zwischen einem an einem innenseitig an dem das Längslenker-Paar (19, 20) anlenkenden achskörperseitigen Lagerbock (6) auskragenden Tragarm (44) oben gegebenen Plateau (45) und der Unterseite des zugehörigen Rahmenlängsträgers (12) des Fahrzeugs eingespannt ist.

19. Achse nach Anspruch 1 oder 18, dadurch gekennzeichnet, daß die Zusatzfeder (28) durch eine Spiraldruckfeder oder eine Spiraldruckfederanordnung, bestehend aus mehreren einander übergreifenden Spiraldruckfedern, gebildet ist, deren Federeigenschaften auf jene des Längsfederblattes (21) abgestimmt sind.

## Claims

1. Air-sprung axle of a motor vehicle, particularly of a bus or a truck, which axle bears steerable wheels (3, 4) and is characterised by the combination of an axle beam (2) which to a large degree is deflection- and torsion-resistant with an axle location provided with
a. a pair of longitudinal arms (19, 20) which are arranged on top of each other, are fastened to the axle beam (2), project beyond said axle beam (2) at the front and are designed to provide moment support and longitudinal guidance on one side of the axle (1), and,
b. on the other side of said axle (1), a longitudinal spring leaf (21) which is fastened to the axle beam (2), projects beyond said axle beam (2) at the front and rear and is designed to provide lateral and longitudinal guidance for said axle (1) on this side of it, and
c. a front frame-mounted location system (22) for the longitudinal spring leaf (21), and
d. a rear frame-mounted location system (23) for the longitudinal spring leaf (21) which location system (23) is soft in longitudinal direction for taking up vertical forces from the moment support, and
e. a front frame-mounted location system (24, 25) for each of the two longitudinal arms (19, 20), and
f. a fixed rear axle-beam-mounted location system (26, 27) for each of the two longitudinal arms (19, 20), and
g. an additional spring (28) on the side of the pair of longitudinal arms (19, 20) for offsetting the vertical spring constant of the longitudinal spring leaf (21) on the other side of said axle (1), which longitudinal spring leaf (21) is provided with an identical zero position on both sides, the zero position being relative to the axle beam (2).

2. Axle according to Claim 1, characterised in that its axle beam (2) is designed as a dropped solid-end axle.

3. Axle according to Claim 1, characterised in that the two arms (19, 20) of the pair of longitudinal arms are horizontally arranged parallel to and above each other in one longitudinal vertical plane in the vehicle.

4. Axle according to Claim 1, characterised in that the two arms (19, 20) of the pair of longitudinal arms are horizontally arranged parallel to each other but above each other in different longitudinal vertical planes in the vehicle.

5. Axle according to one of the Claims 3 and 4, characterised in that one longitudinal arm (19) of the pair of longitudinal arms (19, 20) is arranged above and the other arm (20) below the axle beam (2).

6. Axle according to one of the Claims 3 to 5, characterised in that the two arms (19, 20) of the pair of longitudinal arms are identical in length.

7. Axle according to one of the Claims 3 to 5, characterised in that the two arms (19, 20) of the pair of longitudinal arms differ in length.

8. Axle according to one of the Claims 6 and 7, characterised in that the rear axle-beam-mounted location points (26, 27) for the two arms (19, 20) of the pair of longitudinal arms are arranged in one vertical cross plane in the vehicle.

9. Axle according to one of the Claims 6 and 7, characterised in that the front frame-mounted location points (24, 25) and the rear axle-beam-mounted location points (26, 27) of the two arms (19, 20) of the pair of longitudinal arms are arranged in different vertical cross planes in the vehicle.

10. Axle according to one of the Claims 3 to 9, characterised in that preferably a common, stable bearing mount (30) is provided as front location points (24, 25) for the two arms (19, 20) of the pair of longitudinal arms, which bearing mount (30) is fitted - welded or bolted on - to one frame longitudinal member (12) of the vehicle in a downward-pointing manner and that each of the two arms (19, 20) with a front end head (19/1, 20/1) is fitted virtually without lateral play between the two lateral walls (30/1, 30/2) of the bearing mount (30) or is laterally fitted to said bearing mount (30) and located via a cross axle connection (31, 32).

11. Axle according to one of the Claims 3 to 9, the axle beam (2) having two - one per axle side - bearing mounts (5, 6), on whose top faces an air spring (7, 8) is mounted on each face, which air spring is fitted at its other end to a frame longitudinal member (11, 12) of the vehicle, characterised in that each of the two arms (19, 20) of the pair of longitudinal arms is, in the area of its rear location (26, 27), provided with an end head (19/2, 20/2) and is in a laterally stable manner, located via a cross axle connection (34, 35) at the bearing mount (6) fitted to the axle beam.

12. Axle according to one of the Claims 3 to 11, characterised in that the two arms (19, 20) of the pair of longitudinal arms are made of stable round steel rods provided at their ends preferably with forged-on mounting heads.

13. Axle according to Claim 1, characterised in that the longitudinal spring leaf (21) is connected with the axle beam (2) and projects beyond said axle beam (2) at front and rear preferably in equal portions.

14. Axle according to one of the Claims 11 to 13, characterised in that a support face (36) on which the longitudinal spring leaf (21) is mounted projects on the inside and is provided on that (5) of the two bearing mounts (5, 6) mounted on the axle beam which bearing mount (5) is opposite bearing mount (6) used as locator for the arms (19, 20) of the pair of longitudinal arms.

15. Axle according to one of the Claims 1 to 14, characterised in that for the front location (22) of the longitudinal spring leaf (21) a stable bearing mount (38) is provided, which is fitted - bolted or welded on - to one frame longitudinal member (11) of the vehicle in a downward-pointing manner and at which bearing mount (38) the longitudinal spring leaf (21) with its front bearing eye (21/1) created by rolling or bending is fitted between the lateral walls (38/1, 38/2) or laterally attached to it and fastened by means of a cross-type continuous screwed connection (39).

16. Axle according to one of the Claims 1, 14 and 15, characterised in that the rear side-guiding location (23) for the longitudinal spring leaf (21) takes up vertical forces, is soft in longitudinal direction and is designed as a rocker (40) arranged in a suspended manner on the associated frame longitudinal member (11) of the vehicle.

17. Axle according to Claim 16, characterised in that at its upper end the rocker (40) is located at a bearing mount (41) via a cross-type continuous bearing shaft connection (42) in a laterally stable and suspended manner in which it can be slewed round said bearing shaft connection (42) and that the said bearing mount (41) is firmly fitted - bolted or welded on - to the frame longitudinal member (11) in a downward-pointing manner and that the rocker (40) consists of at least one, preferably two walls (40/1, 40/2) which if necessary are connected with each other by means of a cross web, that the rear end of the longitudinal spring leaf (21) which is formed as a bearing eye (21/2) by means of rolling or bending is laterally fitted to said rocker (40) or inserted and fastened virtually without lateral play between the lower ends of said rocker (40) by means of a further cross-type continuous bearing shaft screwed connection (43).

18. Axle according to the Claims 1 and 11, characterised in that the additional spring (28) is clamped between a face (45) given at the top of a carrier arm (44) projecting on the inside from the axle-beam-mounted bearing mount (6) that locates the pair of longitudinal arms (19, 20) and the underside of the associated frame longitudinal member (12) of the vehicle.

19. Axle according to the Claims 1 and 18, characterised in that the additional spring (28) is designed as a spiral compression spring or a spinal compression spring arrangement consisting of several spiral compression springs overlapping each other and that the properties of said spiral compression spring or spring arrangement are adapted to those of the longitudinal spring leaf (21).

## Revendications

1. Essieu (1) à roues directrices (3, 4), à suspension pneumatique, pour véhicule automobile, notamment autocar ou véhicule utilitaire
caractérisé par
la combinaison d'un corps d'essieu (2) très rigide en flexion et en torsion et d'un guidage d'essieu, comprenant :
a) une paire de bras longitudinaux (19, 20), superposés, fixés au corps d'essieu (2) et dépassant de celui-ci vers l'avant, pour recevoir le couple et assurer le guidage longitudinal d'un côté de l'essieu (1),
b) un ressort-lame longitudinal (21), fixé au corps d'essieu (2) (dépassant de celui-ci vers l'avant et vers l'arrière) de l'autre côté de l'essieu (1) pour son guidage latéral et longitudinal sur ce côté,
c) une articulation avant (22) solidaire du châssis pour le ressort-lame longitudinal (21),
d) une articulation arrière (23) solidaire du châssis mais souple longitudinalement pour le ressort-lame longitudinal (21), afin de recevoir les efforts verticaux de l'appui du couple,
e) une articulation avant (24, 25) solidaire du châssis pour chacun des deux bras longitudinaux (19, 20),
f) une articulation arrière (26, 27) solidaire du côté du corps de l'essieu pour chacun des deux bras longitudinaux (19, 20), et
g) un ressort complémentaire (28), du côté de la paire de bras longitudinaux (19, 20), pour compenser la composante de ressort, verticale, du ressort-lame longitudinal (21) de l'autre côté, avec, des deux côtés, la même position nulle (rapportée au corps d'essieu 2).

2. Essieu selon la revendication 1,
caractérisé en ce que
le corps d'essieu (2) est réalisé comme un essieu cintré à chapes fermées.

3. Essieu selon la revendication 1,
caractérisé en ce que
les deux bras (19, 20) de la paire de bras longitudinaux sont parallèles et horizontaux, et sont superposés dans un plan vertical longitudinal du véhicule.

4. Essieu selon la revendication 1,
caractérisé en ce que
les deux bras (19, 20) de la paire de bras longitudinaux sont parallèles et horizontaux mais superposés dans des plans verticaux, longitudinaux, différents, du véhicule.

5. Essieu selon l'une des revendications 3 et 4,
caractérisé en ce que
l'un des bras (19) de la paire de bras longitudinaux (19, 20) se trouve au-dessus du corps d'essieu (2) et l'autre bras (20) passe en dessous de l'essieu.

6. Essieu selon l'une des revendications 3 à 5,
caractérisé en ce que
les deux bras (19, 20) de la paire de bras longitudinaux sont de même longueur.

7. Essieu selon l'une des revendications 3 à 5,
caractérisé en ce que
les deux bras (19, 20) de la paire de bras longitudinaux sont de longueurs différentes.

8. Essieu selon l'une des revendications 6 et 7,
caractérisé en ce que
les points d'articulation arrière (26, 27) du côté du corps d'essieu (2), pour les deux bras (19, 20) de la paire de bras longitudinaux, sont situés dans un plan vertical transversal du véhicule.

9. Essieu selon l'une des revendications 6 et 7,
caractérisé en ce que
les deux points d'articulation avant (24, 25) du côté du châssis et les deux points d'articulation arrière (26, 27) du côté du corps d'essieu, pour les deux bras (19, 20) de la paire de bras longitudinaux, sont situés chaque fois dans des plans verticaux transversaux différents du véhicule.

10. Essieu selon l'une des revendications 3 à 9,
caractérisé en ce que
pour les articulations avant (24, 25) des deux bras (19, 20) de la paire de bras longitudinaux, il est prévu de préférence un bloc de palier (30), solide, commun, fixé à un longeron (12) du châssis du véhicule (soudé ou vissé) et venant en saillie vers le bas, et chacun des deux bras (19, 20) est articulé par une tête d'extrémité avant (19/1, 20/1), pratiquement sans jeu latéral, entre les deux chapes latérales (30/1, 30/2) du bloc de palier (30), adapté, ou appliqué latéralement contre celui-ci et articulé par un axe de liaison transversal (31, 32).

11. Essieu selon l'une des revendications 3 à 9, dont le corps d'essieu (2) comporte au-dessus deux blocs de palier (5, 6) (un bloc de chaque côté de l'essieu) dont le patin supérieur porte un ressort pneumatique (7, 8) dont l'autre extrémité s'appuie contre un longeron (11, 12) du châssis du véhicule,
caractérisé en ce que
chacun des deux bras (19, 20) de la paire de bras longitudinaux comporte, au niveau de son articulation arrière (26, 27), une tête d'extrémité (19/2, 20/2) et est articulé rigidement, dans la direction latérale, par un axe de liaison transversal (34, 35), au bloc de palier (6) du côté du corps de l'essieu.

12. Essieu selon l'une des revendications 3 à 11,
caractérisé en ce que
les deux bras (19, 20) de la paire de bras longitudinaux sont des barres d'acier solides, de section ronde, ayant en extrémité des têtes de fixation de préférence forgées.

13. Essieu selon la revendication 1,
caractérisé en ce que
le ressort-lame longitudinal (21) est relié au corps d'essieu (2) en dépassant de celui-ci vers l'avant et vers l'arrière, de préférence d'une même longueur.

14. Essieu selon l'une des revendications 11 et 13,
caractérisé en ce que
chacun (5) des deux blocs de palier (5, 6) du côté du corps de l'essieu et en regard de celui-ci, servant d'articulation pour les bras (19, 20) de la paire de bras longitudinaux, est muni d'un patin d'appui (36) en saillie du côté intérieur, sur lequel est fixé le ressort-lame longitudinal (21).

15. Essieu selon l'une des revendications 1 et 14,
caractérisé en ce que
pour l'articulation avant (22) du ressort-lame longitudinal (21), il est prévu un bloc de palier (38), solide, fixé à l'un des longerons (11) du châssis du véhicule (par vissage ou soudage) et venant en saillie vers le bas, sur lequel est adapté le ressort-lame longitudinal (21) avec son oeillet de palier avant (21/1), obtenu par roulage ou cintrage, entre les chapes (38/1, 38/2), en y étant adapté ou en étant appliqué latéralement contre celui-ci, et en étant fixé par une vis liaison (39) transversale.

16. Essieu selon l'une des revendications 1 à 14 et 15,
caractérisé en ce que
l'articulation arrière (23) à guidage latéral, pour recevoir les efforts verticaux, et souple longitudinalement, pour le ressort-lame longitudinal (21), est formée par une bielle (40), articulée de manière suspendue au longeron (11) correspondant du châssis du véhicule.

17. Essieu selon la revendication 16,
caractérisé en ce que
la bielle (40) est prévue au niveau de son extrémité supérieure, de manière stable latéralement, sur un bloc de palier (41) par l'intermédiaire d'une liaison de palier (42) passant transversalement (en pouvant pivoter autour de celle-ci) suivant une articulation suspendue, et le bloc (41) est solidaire du longeron de châssis (11) (par vissage ou soudage) en venant en saillie vers le bas, tandis que la bielle (40) se compose d'au moins une et de préférence deux joues (40/1, 40/2) reliées le cas échéant par une traverse, joues contre lesquelles est rapportée latéralement ou entre l'extrémité inférieure desquelles est fixée pratiquement sans jeu latéral, par une vis transversale de palier (41), l'extrémité arrière du ressort-lame longitudinal (21) formée en oeillet de palier (21/2) (roulé ou cintré).

18. Essieu selon l'une des revendications 1 et 11,
caractérisé en ce que
le ressort complémentaire (28) est serré entre d'une part le bloc de palier (6), au niveau du corps d'essieu (2), sur lequel la paire de bras longitudinaux (19, 20) est articulée à un plateau supérieur (45) d'un bras de support (44) en saillie, et d'autre part la face inférieure du longeron de châssis (12) correspondant du véhicule.

19. Essieu selon la revendication 1 ou 18,
caractérisé en ce que
le ressort complémentaire (28) est un ressort de compression en spirale ou un dispositif de ressort de compression en spirale composé de plusieurs ressorts de compression en spirale venant l'un sur l'autre, et dont les caractéristiques de ressort dépendent du ressort-lame longitudinal (21).
